Europäisches Patentamt

European Patent Office

Office européen des brevets

(11) Publication number : **0 629 877 A1**

## (12) EUROPEAN PATENT APPLICATION

(21) Application number : **94401372.1**

(51) Int. Cl.⁵ : **G01S 5/14,** G01C 21/20

(22) Date of filing : **17.06.94**

(30) Priority : **21.06.93 IL 10608393**

(43) Date of publication of application :
**21.12.94 Bulletin 94/51**

(84) Designated Contracting States :
**AT BE CH DE DK ES FR GB GR IE IT LI NL PT SE**

(71) Applicant : **STATE OF ISRAEL MINISTRY OF DEFENCE RAFAEL ARMAMENT DEVELOPMENT AUTHORITY**
**P.O. Box 2250**
**Haifa 31 021 (IL)**

(72) Inventor : **Zickel, Robert**
**21 Hadekalim**
**27042 Kiryat Bialik (IL)**
Inventor : **Nehemia, Nahum Abraham**
**68/1 Jabotinsky**
**22385 Nahariya (IL)**

(74) Representative : **Hirsch, Marc-Roger et al**
**Cabinet Hirsch**
**34 rue de Bassano**
**F-75008 Paris (FR)**

(54) **GPS-aided dead reckoning navigation.**

(57)   A vehicle tracking system for determining the position of a vehicle, which includes a dead reckoning (DR) mechanism including a heading sensor and a distance sensor and a Global Positioning System (GPS) mechanisms. The system further includes an adjustment mechanism connected to the DR mechanism and to the GPS means, with the adjustment being operative in using the GPS mechanism to improve the accuracy of the position calculated by the DR mechanism.

FIG.2

EP 0 629 877 A1

## FIELD AND BACKGROUND OF THE INVENTION

The present invention relates to vehicle tracking systems and, more particularly, to vehicle tracking systems which utilize Global Positioning System ("GPS") to track the location of vehicles.

A variety of systems are currently in use which have as their objective the tracking of the location of a vehicle, such as a land, sea or air vehicle. These systems are based on one or both of two fundamental techniques. The first technique, known as Dead Reckoning ("DR") relies on the cumulated internal measurements of distance travelled and bearing to calculate the location of the vehicle. In the second technique, Global Positioning System ("GPS"), a GPS receiver is used to receive signals from a GPS satellite and directly compute vehicle location.

GPS navigation suffers from at least two major limitations. The first involves the obscuring of signals, which commonly occurs in urban area and in heavily wooded regions and which temporarily blinds the GPS as the vehicle passes through certain portions of cities, tunnels, heavily forested areas, and the like. The second limitation is a consequence of the legal constraints placed on the non-authorized use of GPS. To prevent non-authorized parties from gaining access to the full power of GPS, the United States Department of Defense has enacted regulations which limit the maximum accuracy of GPS units intended for civilian use. The civilian user of GPS is thus subjected to selective availability ("SA") errors which significantly decrease the accuracy of the system.

Dead Reckoning tracking also suffers from a number of limitations, chief among which is the accumulation of distance and bearing errors which is an inherent limitation of DR systems.

Various attempts have been made to enhance the capabilities of GPS and of DR, either separately or, preferably, together. Among the systems which combine GPS and DR is the Placer GPS/DR product marketed by Trimble Navigation. The Placer GPS/DR automatically switches to DR whenever GPS satellite signals are blocked by tall buildings or terrain features such as tunnels and multi-deck bridges. Thus, at any given time, either the GPS or DR systems is operative and controlling. The Placer GPS/DR claims an accuracy under DR conditions of 3-5% of distance traveled up to 10 km, which accuracy is conditional upon the accuracy of the pulse odometer and on non-SA GPS conditions prior to DR calculation. While such accuracy is a marked improvement over a stand-alone GPS system which would offer no data during GPS outages, it leaves something to be desired.

A further improvement can be made, where the area over which the vehicle is to be navigated is digitally mapped. In this case one could use map-matching information to enhance the navigation capabilities. See, for example, Krakiwsky, Harns and Wong, A Kalman Filter for Integrating Dead Reckoning Map Matching and GPS Positioning, IEEE, pp. 39-46 (1988), which describes a navigation system which integrates, using a Kalman filter, three positioning systems, namely, differential odometer-based DR, map matching and GPS. By making use of the fact that vehicles are constrained to travel over road networks, a correlation is made between vehicle movement patterns and digitally defined roads. For example, if relative direction changes can be detected when a vehicle makes a turn at a known and identified intersection, the vehicle's DR position may be updated automatically by using the known intersection coordinates retrieved from the digital map database.

Such a method suffers from the disadvantage that the method requires a large database containing accurate and highly detailed digital maps showing all possible paths through all possible areas of travel.

Another system which combines GPS and DR is described in McMillan, An Integrated Land Navigation System, IEEE Position Location and Navigation Symp., pp. 221-229 (1988). The system is designed for specialized use in the high Arctic areas, at latitudes above 70°. In this region it is difficult to obtain accurate heading readings. The problem is overcome by use of DR techniques which combine magnetometer and gyro heading information with a digital pulse odometer, use of GPS and Transit satellites for position and height updates, and the use of map height matching using a baroaltimeter sensor in an 8-state Kalman filter. Such a system is highly specialized and complex.

There is thus a widely recognized need for, and it would be highly advantageous to have, a vehicle tracking system which uses both DR and GPS and which is more reliable and robust than systems using either DR or GPS alone or in presently known combinations.

## SUMMARY OF THE INVENTION

According to the present invention there is provided a vehicle tracking system for determining the position of the vehicle, comprising: (a) a dead reckoning (DR) means including a heading sensor and a distance sensor; (b) a Global Positioning System (GPS) means; and (c) an adjustment means connected to the DR means and to the GPS means, the adjustment means operative in using the GPS means to improve the accuracy of the position calculated by the DR means.

Also according to the present invention, there is provided a method for tracking a vehicle so as to determine its position, comprising: (a) calculating the position of the vehicle using dead reckoning (DR) means which include a heading sensor and a distance sensor; (b) periodically using a Global Positioning System (GPS) means; and (c) adjusting the position calculated by the DR means using a suitable adjustment means and using information provided by the GPS means to improve the accuracy of the position calculated by the DR means.

According to preferred embodiments, the adjustment means includes means for varying the weighting of the measurements of the heading sensor, for example by varying the noise level of the measurement of the heading sensor to reflect the level of error of the measurement.

According to further features in preferred embodiments of the invention described below, the filter means includes a Kalman filter.

According to still further features in the described preferred embodiments the DR means includes an odometer and a heading sensor, preferably a magnetometer.

According to still further features in the described preferred embodiments the continual calibration of the DR means incudes the continual calibration of the odometer and of the heading sensor.

The present invention successfully addresses the shortcomings of the presently known configurations by providing a vehicle tracking system which combines DR and GPS in such a way that the DR system is continually calibrated using GPS so as to improve the performance of the overall vehicle tracking system, especially during times when the GPS is temporarily non-operational. A system according to the present invention is particularly suitable for application in conjunction with private ground vehicles where an existing odometer can be supplemented with the addition of a heading sensor, such as a magnetic compass, a gyroscope or a steering wheel angle detector to form, along with GPS receiver and suitable electronics, a system which will be a GPS-aide DR vehicle tracking or navigation system.

BRIEF DESCRIPTION OF THE DRAWINGS

The invention is herein described, by way of example only, with reference to the accompanying drawings, wherein:

FIG. 1 shows the axes and angle definition used herein;
FIG. 2 is a block diagram of one embodiment of a system according to the present invention;
FIG. 3 schematically depicts the system architecture of an integrated systems according to the present invention;
Straight Trajectory - Continuous GPS -- Figures 4-19
FIG. 4 shows a straight trajectory;
FIG. 5 is a constant velocity;
FIG. 6 is a constant heading;
FIG. 7 is a zero heading rate of change;
FIG. 8 shows the position errors of a stand-alone GPS system (A);
FIG. 9 shows the position errors of a stand-alone DR system (B);
FIG. 10 shows the position errors of a non-interactive GPS/DR system (C);
FIG. 11 shows the position errors of a GPS/DR system according to the present invention;
FIG. 12 shows the position estimated by system (A);
FIG. 13 shows the position estimated by system (B);
FIG. 14 shows the position estimated by system (C);
FIG. 15 shows the position estimated by a system according to the present invention;
FIG. 16 shows the North covariance of a system according to the present invention;
FIG. 17 shows the East covariance of a system according to the present invention;
FIG. 18 shows the heading covariance of a system according to the present invention;
FIG. 19 shows the scale factor covariance of a system according to the present invention;
Straight Trajectory - GPS Gap -- Figures 20-35
FIG. 20 corresponds to Figure 4;
FIG. 21 corresponds to Figure 5;
FIG. 22 corresponds to Figure 6;
FIG. 23 corresponds to Figure 7;
FIG. 24 corresponds to Figure 8;
FIG. 25 corresponds to Figure 9;
FIG. 26 corresponds to Figure 10;
FIG. 27 corresponds to Figure 11;
FIG. 28 corresponds to Figure 12;

FIG. 29 corresponds to Figure 13;
FIG. 30 corresponds to Figure 14;
FIG. 31 corresponds to Figure 15;
FIG. 32 corresponds to Figure 16;
FIG. 33 corresponds to Figure 17;
FIG. 34 corresponds to Figure 18;
FIG. 35 corresponds to Figure 19;

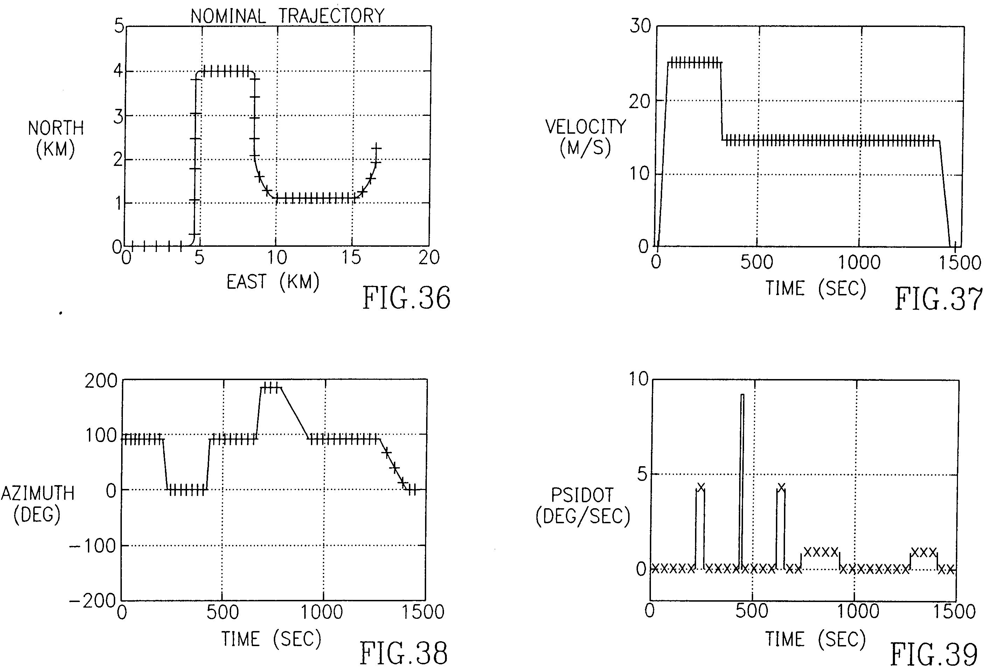

Circuitous Trajectory - Continuous GPS - Figures 36-52

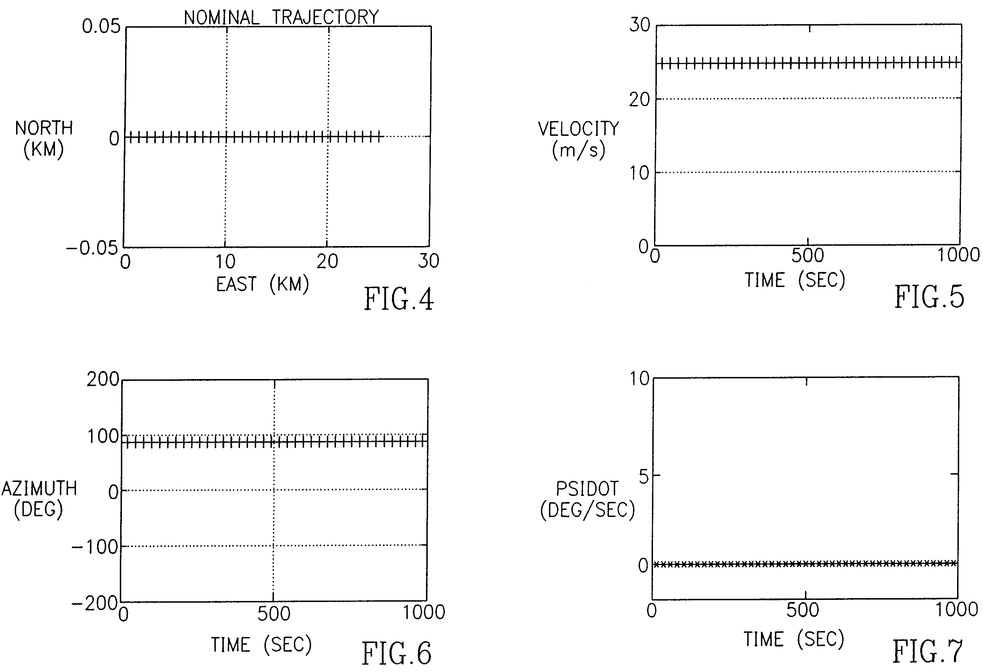

FIG. 36 corresponds to Figure 4;
FIG. 37 corresponds to Figure 5;
FIG. 38 corresponds to Figure 6;

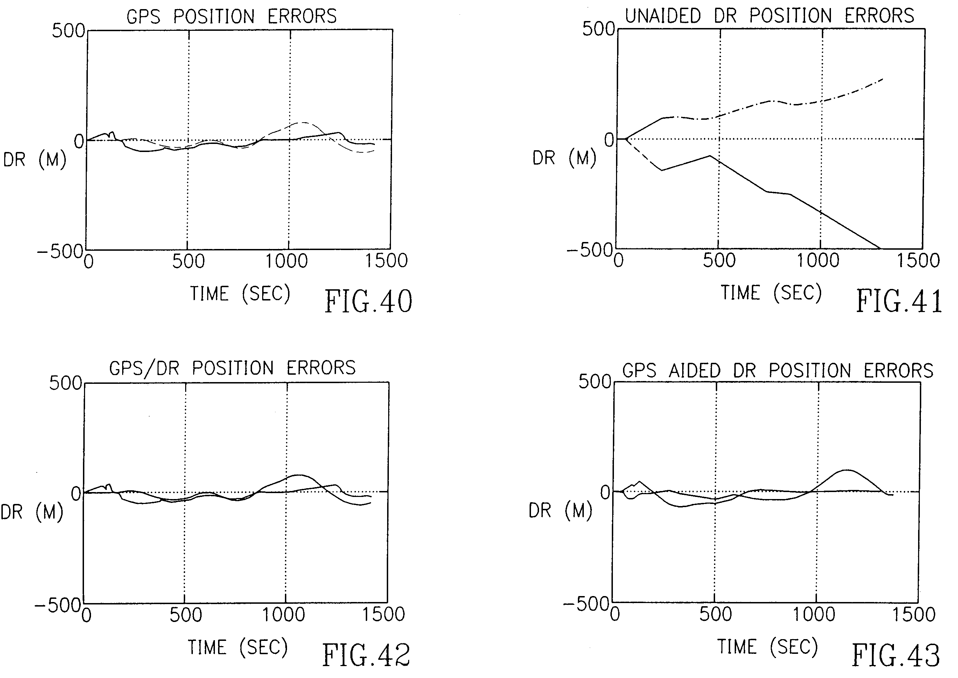

FIG. 39 corresponds to Figure 7;

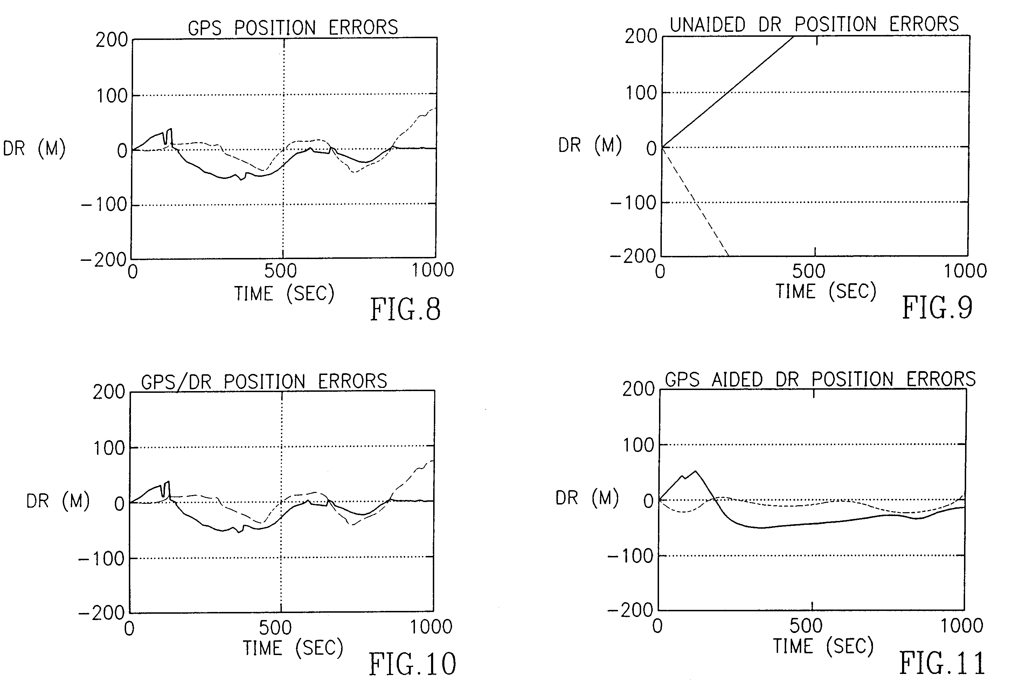

FIG. 40 corresponds to Figure 8;
FIG. 41 corresponds to Figure 9;

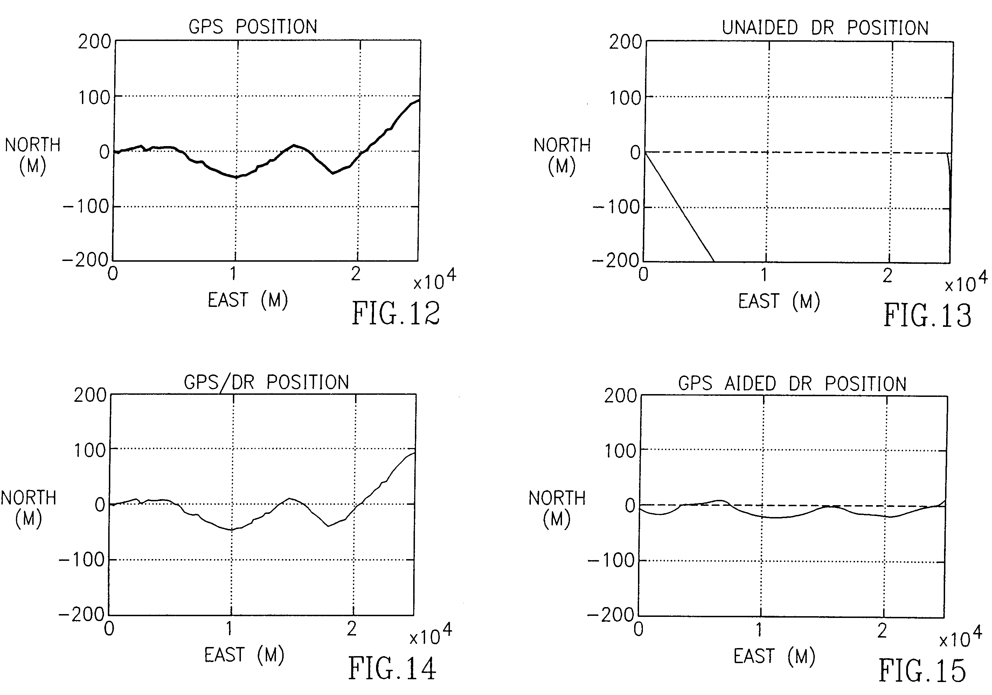

FIG. 42 corresponds to Figure 10;
FIG. 43 corresponds to Figure 11;

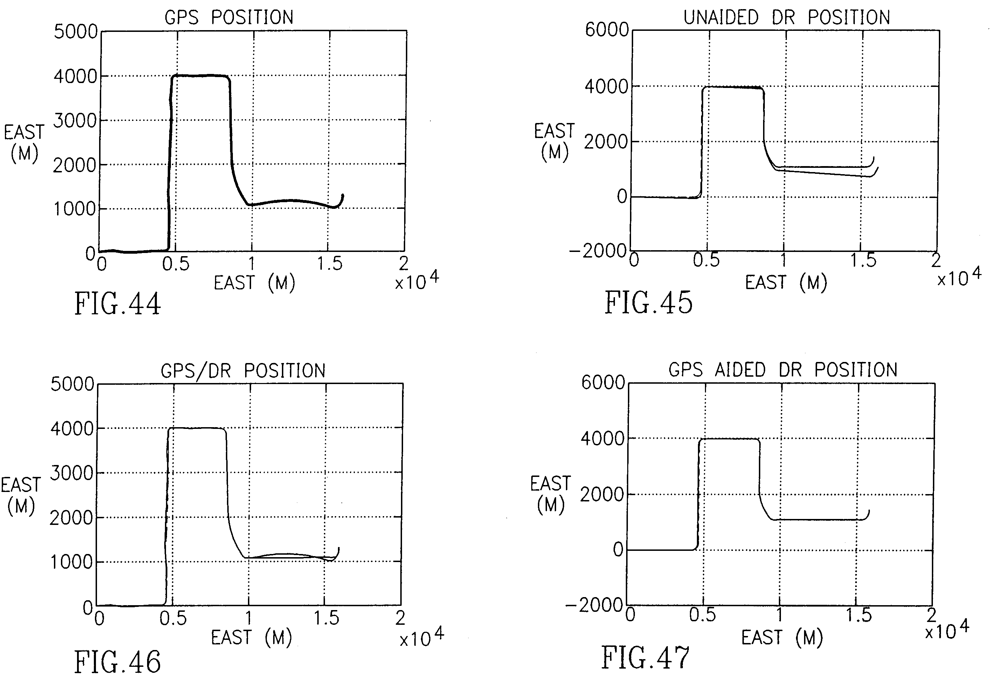

FIG. 44 corresponds to Figure 12;
FIG. 45 corresponds to Figure 13;
FIG. 46 corresponds to Figure 14;

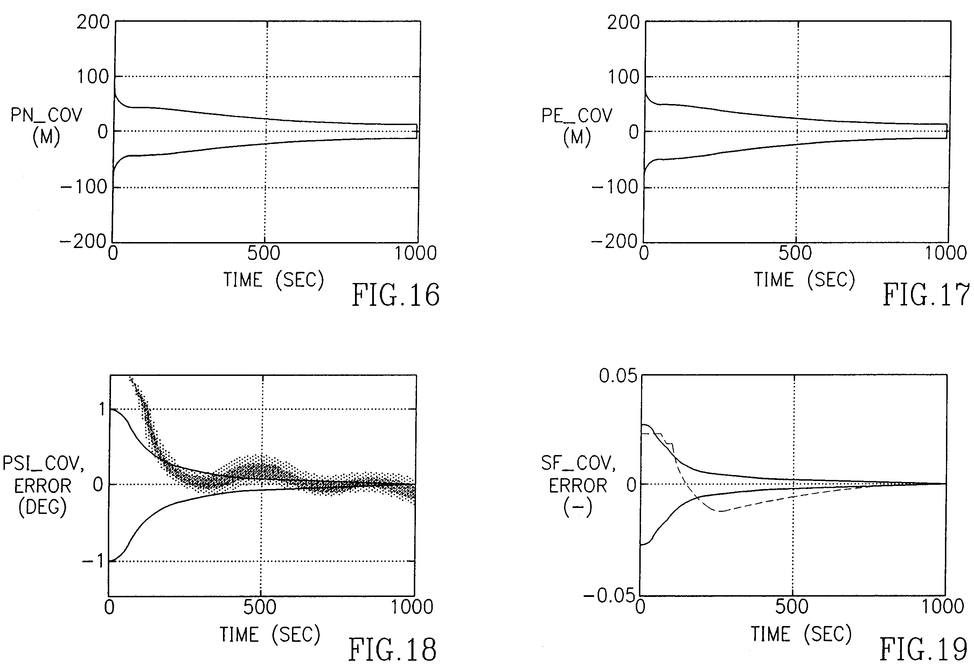

FIG. 47 corresponds to Figure 15;

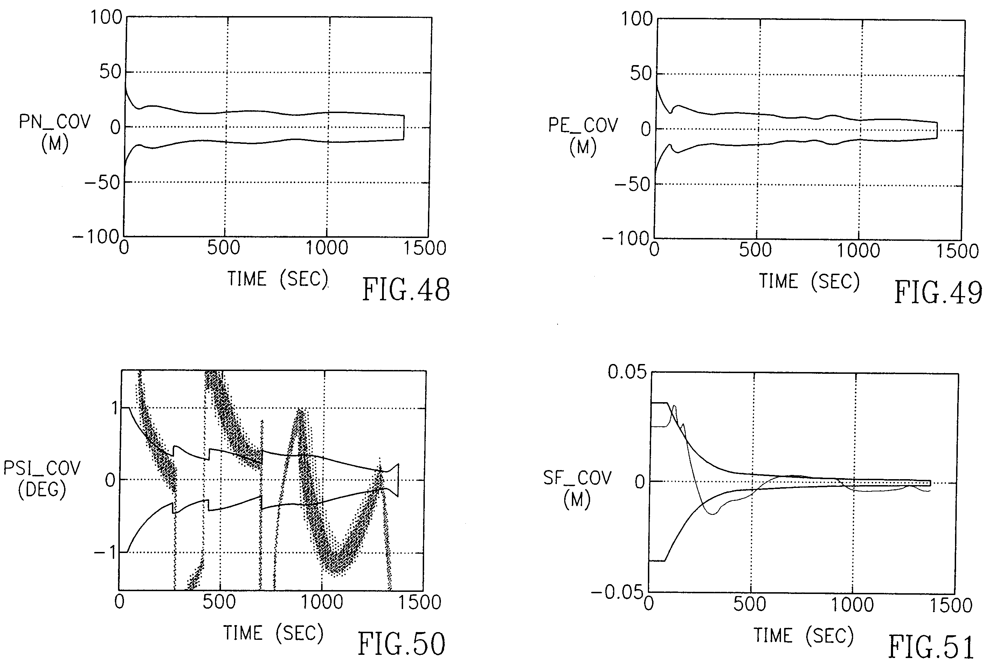

FIG. 48 corresponds to Figure 16;
FIG. 49 corresponds to Figure 17;
FIG. 50 corresponds to Figure 18;
FIG. 51 corresponds to Figure 19;

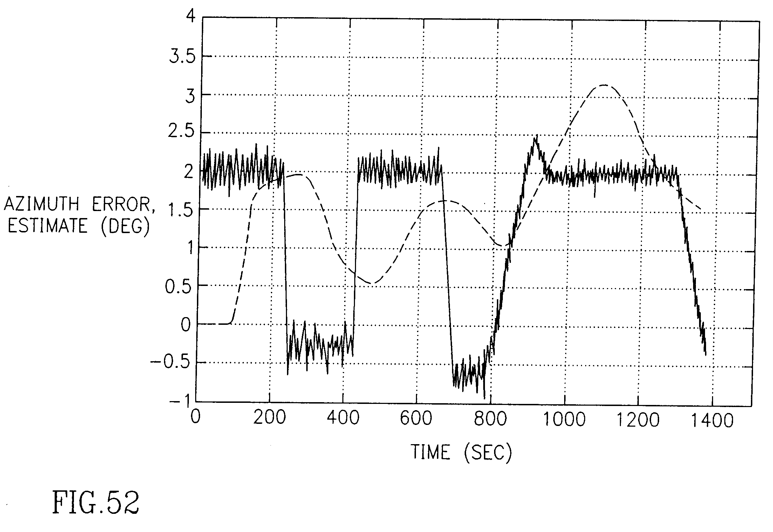

FIG. 52 shows the azimuth error estimated by a system according to the present invention (broken line) and the actual error (solid line).

## DESCRIPTION OF THE PREFERRED EMBODIMENTS

The present invention is of a vehicle tracking system which can be used to track vehicles and aid in their navigation. Specifically, the present invention is of a vehicle tracking system which is more accurate and reliable than heretofore known.

As described briefly above, dead reckoning systems suffer from the inherent accumulation of errors. These errors find their source both in the path length errors and in heading errors. These errors are discussed in more detail below.

Path length for ground vehicles is typically determined by counting the number of revolutions of the vehicle wheels. Path length errors ("scale factor" or "SF" errors) originate with these odometer readings and can be introduced into the path length determination in a number of ways.

First, the effective diameter of the tires varies with the degree to which the tires are inflated and the degree to which the vehicle is loaded. It is estimated that changes in effective tire diameter can increase or decrease the odometer's scale factor by up to 2%.

A second cause of scale factor error is slippage which might be caused by differential turning of the wheels relative to the surface, as might be experienced when traveling over a soft surface, such as sand, or when the vehicle slides across a surface, as when the vehicle slips on an icy road or is towed without turning the wheels.

Scale factor error, as well as heading error is introduced by the fact that DR is performed with sampled data which is not continuous. This error is typically small and can be further reduced by increasing the sampling frequency, i.e., by reducing the time between successive samplings of the odometer and heading indicators.

To limit scale error it is advisable to periodically recalibrate the system to compensate for vehicle and road conditions. Typically, an initial calibration is carried out when the system is first installed, or upon changing the tire size of the vehicle. The scale factor is automatically stored and is used as the scale factor in subsequent calculations.

The condition of the vehicle remains largely unchanged during normal travel. However, during vehicle stops the vehicle's condition may change as a result of load changes or tire inflation. These effects can be taken into account by re-initializing the scale factor covariance.

The scale factor is affected by road conditions primarily through slippage, which is normally small and substantially constant when travel is over a paved roadway.

The heading measurement in a DR system is preferably made using a low cost compass which may be based on a triad of strapdown magnetic fluxgates and a microcomputer. Strapdown fluxgates have better performance in dynamic environments than do pendulum mounted fluxgates.

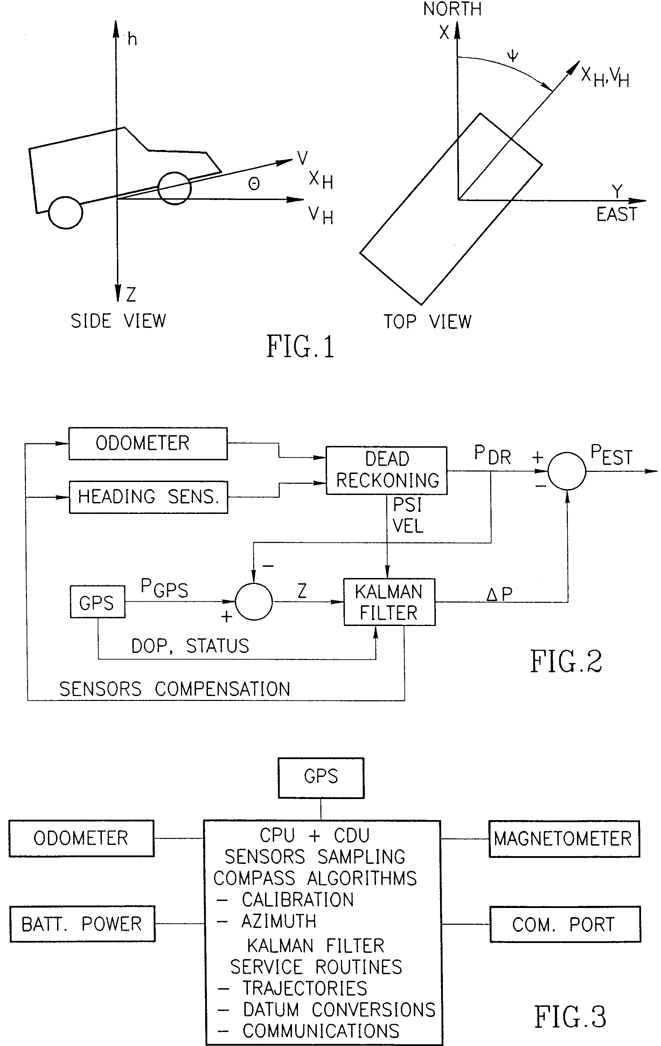

Most preferably, the heading measurement means includes a magnetometer, which is a sensor capable of measuring the intensity of the magnetic field along its input axis. Three sensors are attached to the vehicle with their input axes along the X, Y and Z axes, as shown in Figure 1. Using tilt meeters, the measured flux is rotated from the vehicle axis to the Local Level Local North (LLLN) axis to obtain the local magnetic north.

While such magnetometers are typically low priced, small, reliable and free of drift errors, significant problems can be encountered when such a device is mounted in vehicles made of steel or containing soft iron. A typical vehicle might contain a large number of magnetic dipoles whose magnetic fields may be stronger than that produced by the earth. Soft iron also tends to warp and distort the earth's magnetic field. It is generally accepted that the magnetic signature of a vehicle changes for a variety of reasons, including, but not limited to, body work, shock, temperature changes, and the loading and unloading of ferrous materials. See, for example, Whitcomb, Sensor Compensation for Vehicle Magnetic Signatures, IEEE AES Magazine, February 1989. These changes cannot be compensated by an initial calibration and must be handled continually as real time adjustments.

The errors of a magnetic compass are discussed by Liu, Chang and James, A High Accuracy Magnetic Heading System Composed of Fluxgate Magnetometers and a Microcomputer, IEEE, pp. 148-152 (1989). The magnetic compass is compared to gyro compasses and is found to be smaller, lighter, of simpler construction, having a quicker reaction time, free from drift and more reliable. The sources of error of the magnetic compass include sensor offsets, scale factor mismatch, sensor non-orthogonality, sensor tilt errors and compass deviation. All except for the compass deviation error are instrumentation errors. Compass deviation is the disturbance of natural magnetic field surrounding the magnetic sensors. Heading error caused by such a disturbance is called compass deviation and can be as high as 10°. The model for compass deviation if of the form:

$$\Delta\psi = B + S_1\sin(\psi) + C_1\cos(\psi) + S_2\sin(2\psi) + C_2\cos(2\psi) \quad (1)$$

Laboratory tests reported by Liu, Chang and James indicate that the absolute heading error of a calibrated magnetic compass is less than 0.3°.

In order to properly integrate the different sensors using a Kalman filter, both stochastic and deterministic errors must be carefully modeled. Deterministic errors, such as magnetic compass heading errors, are modeled so that their effects can be removed as much as possible by an initial calibration process, and the remaining errors are modeled as random processes to enable the Kalman filter to estimate them and to calculate the appropriate gain matrix to weight the various measurements.

After calibrating the compass there remains a residual heading error which requires continual calibration. The error may be gauged and compensated in at least four different ways, all of which use the cross-track error as a measure of heading error, obviating the need for an external heading reference.

One method of gauging the error involves the use of a nonlinear least squares algorithm to update the error model coefficients. Such a method requires considerable computing power and is difficult to implement with small CPU's.

A second method involves the use of look-up tables to determine the heading errors. Here, the method does not give an indication of the covariance error.

A third method involves the use of a Kalman filter based on an exponentially correlated random error. A shortcoming of this method is that, because the correlation time changes rapidly, the method requires a very high sampling rate.

Preferably, the heading error is gauged using a fourth method, which uses a Kalman filter and which is based on increasing the process noise according to the azimuth change. The heading error covariance is thus increased to facilitate the correction of the heading error. Such a method can be used with a low sampling rate, for example, 2-4 Hz. The results obtained include the error covariance which may be stored in a look-up table for future reference.

Errors are also introduced into the system through the GPS. While present day GPS is exceedingly accurate, with errors of only a few meters, civilian users have access only to systems which are subject to selective availability (SA). SA systems are subject to errors on the order of 100 meters 2dRMS, which constitutes the dominant error is such systems. Actual measurements of GPS position error exhibit behavior of band pass white noise or a high order Markov process.

The principles and operation of a vehicle tracking system according to the present invention may be better understood with reference to the drawings and the accompanying description.

Referring now to the drawings, Figure 2 illustrates one example of a vehicle tracking system according to the present invention. The system is based on DR subsystem which is continually aided or compensated by GPS, typically at relatively low frequencies, such as 1 Hz. An odometer and a heading sensor are used throughout to determine the distance and direction of travel, respectively. These serve as the inputs of the DR subsystem. The combination of distance and direction produces a position determined by the DR, $P_{DR}$

Concomitantly, GPS periodically puts out a position indicator, $P_{GPS}$ as well as a Dilution of Precision (DOP) indicator, which is useful in changing the covariance of the measurement matrix, R, and the status is used as a check of the validity of the GPS data.

Whenever the GPS are operational, the position determined by DR, $P_{DR}$ is subtracted from that determined by GPS, $P_{GPS}$, and the result is fed to a Kalman filter of suitable design. The Kalman filter also receives heading and velocity information from the DR system and calculates an adjustment to $P_{DR}$ which, when combined with $P_{DR}$, produces the system's best estimate of the position, $P_{EST}$. At the same time, the Kalman filter calculates adjustments to the odometer and heading sensor and their respective covariances which will correct the sensors so that future calculations of $P_{DR}$ will be more accurate. The Kalman filter is designed to properly weight the various measurements, depending on their level of accuracy, as reflected by their error covariances.

During those times when GPS is temporarily non-operational, $P_{EST}$ is calculated by the DR subsystem alone. However, the DR subsystem will have been previously fine-tuned and adjusted just prior to the GPS outage. The result is a $P_{EST}$ which is considerably more accurate than that produced by a stand-alone DR system or by GPS/DR system wherein the DR subsystem which operates during GPS outages does not interact with the GPS.

The biggest error associated with the DR subsystem, for example in the case of a magnetic compass, is the heading error. The Kalman filter is designed to produce an adaptive weighting of the noise in the sensor. The noise is increased whenever the heading angle is increased, for example, wherever the heading changes rapidly. The increase in the noise lowers the weighting of the readings and allows for bigger corrections to be implementing, thereby resulting in more accurate heading information.

The equations of motion in the North, East and up directions for a system, assuming no slippage, are (Figure 1):

$$dP_N/dt = V \cos\theta \cos\psi \quad (2)$$
$$dP_E/dt = V \cos\theta \sin\psi \quad (3)$$
$$dh/dt = V \sin\theta \quad (4)$$

Integration of these equations yields the true position of the vehicle as a function of time, assuming no initial errors.

For example, cone can assume that the car travels in a horizontal plane ($\theta = 0$), the position errors due to heading error and odometer scale factor errors can be derived using a first order Taylor series expansion. Denoting the difference between the DR position and the true position by $\delta P$ ($= P_{DR}-P_{True}$), one obtains:

$$d(\delta P_N)/dt = -V \sin(\psi)\delta\psi + V \cos(\psi)\delta S_f \quad (5)$$
$$d(\delta P_N)/dt = V \cos(\psi)\delta\psi + V \sin(\psi)\delta S_f \quad (6)$$

where $S_f$ is the scale factor, V is the velocity and $\psi$ is the heading angle. Using a state space representation (Equation 8):

$$
\begin{bmatrix} d(\delta P_N)/dt \\ d(\delta P_N)/dt \\ d\psi/dt \\ d(\delta S_f)/dt \end{bmatrix}
=
\begin{bmatrix}
0 & 0 & -V\sin(\psi) & V\cos(\psi) \\
0 & 0 & V\cos(\psi) & V\sin(\psi) \\
0 & 0 & 0 & 0 \\
0 & 0 & 0 & 0
\end{bmatrix}
\cdot
\begin{bmatrix} dP_N/dt \\ dP_E/dt \\ \delta\psi \\ \delta S_f \end{bmatrix}
+
\begin{bmatrix} 0 \\ 0 \\ w_\psi \\ w_{Sf} \end{bmatrix}
$$

The measurement is the actual difference between $P_{DR}$ and $P_{GPS}$ (Figure 2), where $P_{GPS} = P_{True} - v$, where v represents the measurement noise. Using state representation, in the form of $Z = HX + V$, one obtains:

$$
Z =
\begin{bmatrix}
1 & 0 & 0 & 0 \\
0 & 1 & 0 & 0
\end{bmatrix}
\cdot
\begin{bmatrix} dP_N/dt \\ dP_E/dt \\ \delta\psi \\ \delta S_f \end{bmatrix}
+
\begin{bmatrix} v_{PN} \\ v_{PE} \end{bmatrix}
\quad (8)
$$

The Kalman filter estimates the north and east position errors, the compass heading error and the vehicle odometer scale factor error.

The filter estimates these errors by processing all the available measurements using appropriate stochastic and deterministic error models. A discussion of a discrete Kalman filtering algorithm can be found in Gelb, Applied Optimal Estimation, M.I.T. Press. The state vector used represents the error between the true trajectory and the DR trajectory:

$$X_{k+1} = A_k X_k + \Gamma_k W_k \qquad cov\{W_k\} = Q_k \qquad E\{W_k\} = 0 \quad (9)$$

where

$$V_S = T/N \, \Sigma \, V_i \sin(\psi_i)$$
$$V_C = T/N \, \Sigma \, V_i \cos(\psi_i)$$

where both summations are over i from 1 to N, and

$$N = T/dt$$

T    is the KF time interval

dT    is the DR time interval

By definition, the discrete transition matrix is

$$A_k = \Phi(kT,(k-1)T) = \Pi\Phi(iT,(i-1)T) \simeq \Pi e^{A(idT)dT} \simeq \Pi(I + A(idT))dT$$

or

$$A_k \simeq \begin{bmatrix} 1 & 0 & -V_s & V_c \\ 0 & 1 & V_c & V_s \\ 0 & 0 & 1 & 0 \\ 0 & 0 & 0 & 1 \end{bmatrix} \qquad (10)$$

where the multiplication limits run from i=1 to i=N.

Since a full reset is used, the optimal state is initiated at zero:

$$E\{X(0)\} = 0 \qquad E\{[X(0)][X(0)]^T\} = P_0 \quad (11)$$

The measurement model is given by:

$$Z_k = H_k X_k + Y_k \qquad cov\{V_k\} = R_k \qquad E\{V_k\} = 0 \quad (12)$$

The error estimate update extrapolation, with full reset, is:

$$X_{k+t} = A_k X_k = 0 \quad (13)$$

The error estimate update using full reset is:

$$X_{k+1} = K_{k+1} Z_{k+1} \quad (14)$$

The error covariance extrapolation is

$$M_{k+1} = A_k P_k A_k^T + \Gamma_k Q_k \Gamma_k^T \quad (15)$$

where

$$\Gamma_k Q_k \Gamma_k^T = \int_0^T e^{At} Q e^{A^T t} dt = \int_0^T (I + At + ...)Q(I + A^t t + ...)dt$$
$$\simeq \int_0^T [Q + (AQ + QA^T)t]dt + (AQ + (AQ)^T)T^2/2$$

The terms AQ were neglected and the Q matrix is used to tune the filter. The gain matrix is then,

$$K_{k+1} = M_{k+1} H_{k+1}^T [H_{k+1} M_{k+1} H_{k+1}^T + R_{k+1}]^{-1} \quad (16)$$

The error variance update is then,

$$P_{k+1} = [I - K_{k+1} H_{k+1}] M_{k+1} [I - K_{k+1} H_{k+1}]^T + K_{k+1} R_{k+1} K_{k+1}^T \quad (17)$$

Preferably, a system according to the present invention is formed in a single integrated and compact unit, shown schematically in Figure 3. The unit receives data from a digital odometer, a magnetic compass and a GPS antenna. The unit may rely on its own processor to calculate the estimated location or, alternatively, the unit may rely on the processing power and memory of the GPS receiver, which would render a unit according to the present invention simpler and cheaper.

To demonstrate the performance of a system according to the present invention, four DR-based vehicle tracking systems were compared, using two different vehicle trajectories. The results are shown in Figures 4-51.

The four systems compared are: (A) a stand-alone GPS; (B) a standalone DR system; (C) a combination GPS/DR system without interaction between the two systems; and (D) a GPS-aided DR system according to the present invention. The two trajectories used are a straight travel in a single direction and a more circuitous route involving a number of turns.

Shown in Figures 4-19 are various parameters relating to the case of a straight trajectory without loss of GPS. The nominal trajectory, velocity and heading are shown in Figures 4, 5 and 6, respectively. The rate of change of the heading (=0) is shown in Figure 7. The behavior of the four systems is shown in Figures 8-11, where dotted lines represent the North component and solid lines represent the East component.

It is to be seen that the range error of stand-alone DR system (B) with built in East error (SF = 1.02) and North error (heading error of 2°) is totally unacceptable (Figure 9). It is also to be noted that the range error of the GPS system (A) (Figure 8)and the non-interactive GPS/DR system (C) (Figure 10) is identical, since the DR never comes into play in system (C) as long as the GPS is operational. Both systems give reasonably accurate results, as does the GPS-aided DR system according to the present invention (D). The corresponding estimated position for the four systems is shown in Figures 12-15. The system according to the present invention (Figure 15) is seen to give the best results.

Shown in Figures 16 and 17 are the North and East covariances of a system according to the present invention. It is seen that the covariance converges toward a small steady state value as the system 'learns' the error and attempts to adjust and calibrate itself.

Shown in Figures 18 and 19 are the heading and scale factor covariances of a system according to the present invention. Here, the system errors are converging toward a zero covariance.

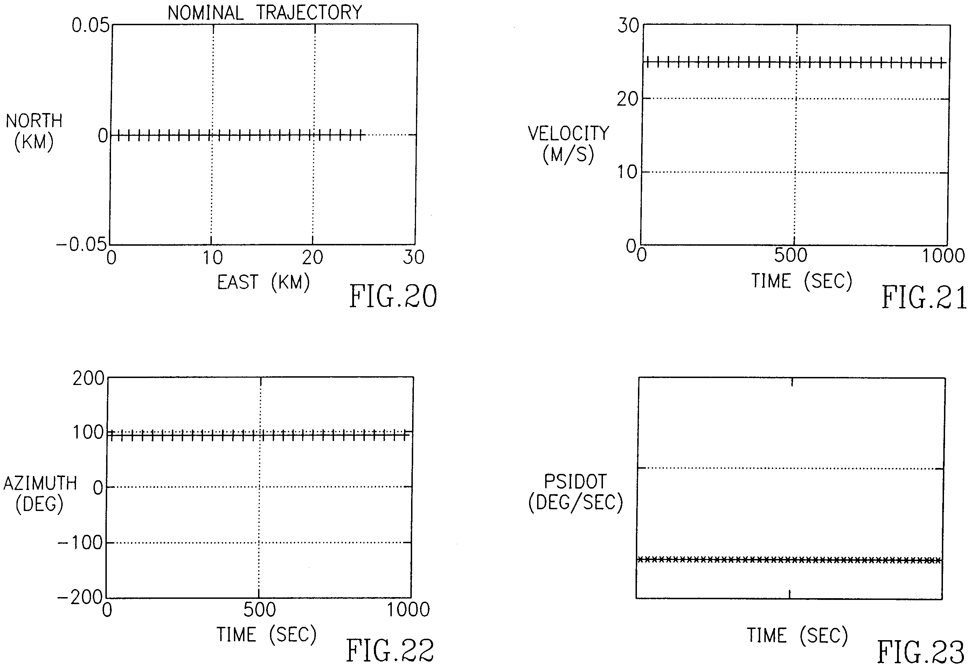

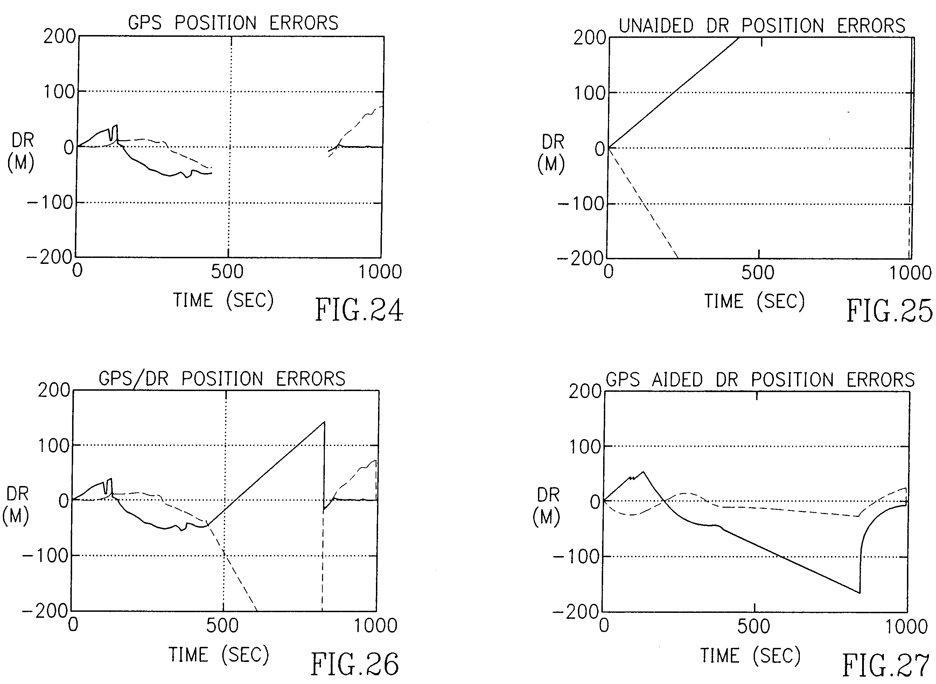

Shown in Figures 20-35 are various parameters relating to the case of a straight trajectory but with loss of GPS. The nominal trajectory, velocity and heading are shown in Figures 20, 21 and 22, which are identical with Figures 4, 5 and 6, respectively. The rate of change of the heading (=0) is shown in Figure 23 which is the same as Figure 7. The behavior of the four systems is shown in Figures 24-27, where dotted lines represent the North component and solid lines represent the East component. Here the GPS was blocked for a period of time during the trajectory, as can be clearly seen in the range error of the stand-alone GPS system (Figure 24).

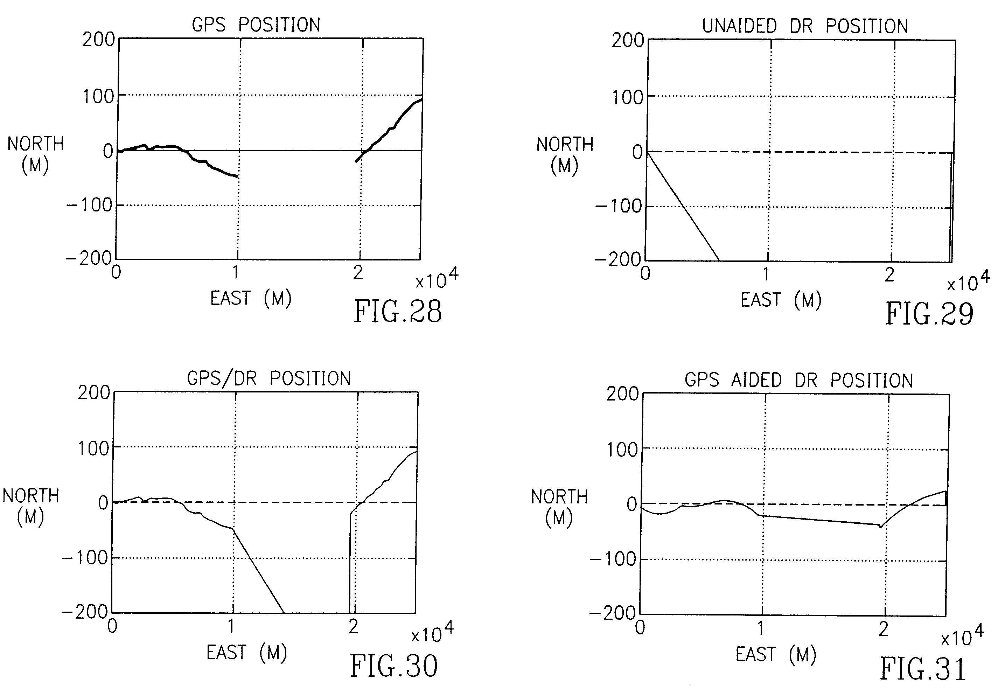

It is to be seen that the range error of stand-alone DR system (B) with built in East error (SF = 1.02) and North error (heading error of 2°) is, once again, totally unacceptable (Figure 25). It is also to be noted that the range error of the GPS system (A) (Figure 24) and the non-interactive GPS/DR system (C) (Figure 26) is identical before and after the GPS outage, or gap. Neither system gives particularly satisfying results during the GPS gap. The corresponding estimated position for the four systems is shown in Figures 28-31. The system according to the present invention (Figure 31) is seen to clearly give the best results.

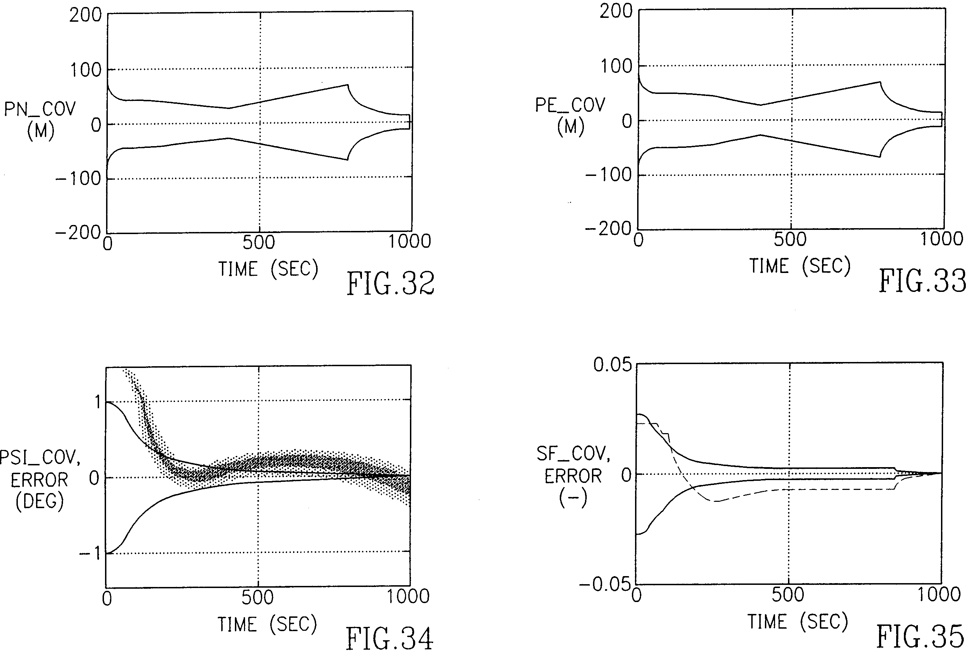

Shown in Figures 32 and 33 are the North and East covariances of a system according to the present invention. It is seen that the covariance converges toward a small steady state value as the system 'learns' the error and attempts to adjust and calibrate itself. It is to be noted that the covariance actually increases during the GPS gap to reflect the increased uncertainty of the DR position during the period when the DR system is not being compensated by the GPS.

Shown in Figures 34 and 35 are the heading error and scale factor error covariances of a system according to the present invention. Here too, the system errors are converging toward a zero covariance. It to be noted that the convergence toward zero error is temporarily halted during the GPS gap.

Shown in Figures 36-51 are various parameters relating to the case of a circuitous trajectory without loss of GPS. The nominal trajectory, velocity and heading are shown in Figures 36, 37 and 38, which are strikingly different from those shown in Figures 4, 5 and 6, respectively. The trajectory this time involves a series of turns of greater and lesser severity, as can be seen from the plot of the rate of change of the heading shown in Figure 39. The behavior of the four systems is shown in Figures 40-43, where dotted lines once again represent the North component and solid lines represent the East component.

It is to be seen that the range error of stand-alone DR system (B) with built in East error (SF = 1.02) and North error (heading error of 2°) once again suffers from large errors (Figure 41). It is also to be noted that the range error of the GPS system (A) (Figure 40) and the non-interactive GPS/DR system (C) (Figure 42) is identical since the DR does not come into play. The corresponding estimated position for the four systems is shown in Figures 44-47.

Shown in Figures 48 and 49 are the North and East covariances of a system according to the present invention. It is seen that the covariance slightly increases following each turn and converges toward a small steady state value as the heading error is estimated. It is to be noted that the covariances actually increase immediately following turns in the trajectory.

Shown in Figures 50 and 51 are the heading and scale factor covariances of a system according to the present invention. Here too, the system attempts to converge toward a zero heading and scale factor.

Depicted in Figure 52 is a plot similar to that of Figure 50 which more explicitly shows the azimuth error estimated by a system according to the present invention (broken line) and the actual error (solid line). It is to be noted that the heading error estimate follows the actual heading error.

While the invention has been described with respect to a limited number of embodiments, it will be appreciated that many variations, modifications and other applications of the invention may be made.

**Claims**

1. A vehicle tracking system for determining the position of the vehicle, comprising:
   (a) a dead reckoning (DR) means including a heading sensor and a distance sensor;
   (b) a Global Positioning System (GPS) means; and
   (c) an adjustment means connected to said DR means and to said GPS means, said adjustment means operative in using said GPS means to improve the accuracy of the position calculated by said DR means.

2. A system as in claim 1 wherein said adjustment means includes means for varying the weighting of the measurements of said heading sensor.

3. A system as in claim 1 wherein said adjustment means is effective in varying the noise level of the measurement of said heading sensor to reflect the level of error of the measurement.

4. A system as in claim 1 wherein said adjustment means includes a Kalman filter.

5. A system as in claim 1 wherein said distance sensor is an odometer.

6. A system as in claim 1 wherein said heading sensor is selected from the group consisting of a compass, a gyroscope and a steering wheel angle detector.

7. A system as in claim 6 wherein said heading sensor includes a magnetometer.

8. A system as in claim 6 wherein said continual calibration of said DR means includes the continual calibration of said odometer and of said heading sensor.

9. A system as in claim 1, wherein said DR means includes means for detecting the angle of the steering wheel of the vehicle.

10. A system as in claim 1 wherein errors associated with said heading sensor are stored and are used in subsequent adjustments.

11. A method for tracking a vehicle so as to determine its position, comprising:
    (a) calculating the position of the vehicle using dead reckoning (DR) means which include a heading sensor and a distance sensor;
    (b) periodically using a Global Positioning System (GPS) means; and
    (c) adjusting the position calculated by said DR means using a suitable adjustment means and using information provided by said GPS means to improve the accuracy of the position calculated by said DR means.

12. A method as in claim 11 wherein said adjustment means includes means for varying the weighting of the measurements of said heading sensor.

13. A method as in claim 11 wherein said adjusting includes varying the noise level of the measurement of said heading sensor to reflect the level of error of the measurement.

14. A method as in claim 11 wherein said adjustment means includes a Kalman filter.

15. A method system as in claim 10 wherein said distance sensor is an odometer.

16. A method as in claim 11 wherein said heading sensor is selected from the group consisting of a compass, a gyroscope and a steering wheel angle detector.

17. A method as in claim 16 wherein said heading sensor includes a magnetometer.

18. A method as in claim 16 wherein said continual calibration of said DR means includes the continual calibration of said odometer and of said heading sensor.

19. A method as in claim 11, wherein said DR means includes means for detecting the angle of the steering wheel of the vehicle.

20. A method as in claim 11 further comprising storing errors associated with said heading sensor for use in subsequent adjustments.

FIG.1

FIG.2

FIG.3

NORTH
(KM)

NOMINAL TRAJECTORY

EAST (KM)

FIG.4

AZIMUTH
(DEG)

TIME (SEC)

FIG.6

VELOCITY
(m/s)

TIME (SEC)

FIG.5

PSIDOT
(DEG/SEC)

TIME (SEC)

FIG.7

EP 0 629 877 A1

## GPS POSITION ERRORS

FIG.8

## UNAIDED DR POSITION ERRORS

FIG.9

## GPS/DR POSITION ERRORS

FIG.10

## GPS AIDED DR POSITION ERRORS

FIG.11

EP 0 629 877 A1

GPS POSITION

NORTH (M)

200

100

0

-100

-200

0          1          2
EAST (M)                    x10⁴

FIG.12

UNAIDED DR POSITION

NORTH (M)

200

100

0

-100

-200

0          1          2
EAST (M)                    x10⁴

FIG.13

GPS/DR POSITION

NORTH (M)

200

100

0

-100

-200

0          1          2
EAST (M)                    x10⁴

FIG.14

GPS AIDED DR POSITION

NORTH (M)

200

100

0

-100

-200

0          1          2
EAST (M)                    x10⁴

FIG.15

FIG.16

FIG.17

FIG.18

FIG.19

NOMINAL TRAJECTORY

NORTH
(KM)

0.05

0

-0.05

++++++++++++++++++++++++

0        10        20        30

EAST (KM)

FIG.20

VELOCITY
(M/S)

30

20

10

0

++++++++++++++++++++++++++++++

0              500             1000

TIME (SEC)

FIG.21

AZIMUTH
(DEG)

200

100

0

-100

-200

+++++++++++++++++++++++++++++++

0              500             1000

TIME (SEC)

FIG.22

PSIDOT
(DEG/SEC)

**************************************

TIME (SEC)

FIG.23

EP 0 629 877 A1

16

EP 0 629 877 A1

GPS POSITION ERRORS

200

100

DR
(M) 0

-100

-200
    0          500         1000
        TIME (SEC)

FIG.24

UNAIDED DR POSITION ERRORS

200

100

DR
(M) 0

-100

-200
    0          500         1000
        TIME (SEC)

FIG.25

GPS/DR POSITION ERRORS

200

100

DR
(M) 0

-100

-200
    0          500         1000
        TIME (SEC)

FIG.26

GPS AIDED DR POSITION ERRORS

200

100

DR
(M) 0

-100

-200
    0          500         1000
        TIME (SEC)

FIG.27

17

**GPS POSITION**

NORTH
(M)

EAST (M)

FIG.28

**UNAIDED DR POSITION**

NORTH
(M)

EAST (M)

FIG.29

**GPS/DR POSITION**

NORTH
(M)

EAST (M)

FIG.30

**GPS AIDED DR POSITION**

NORTH
(M)

EAST (M)

FIG.31

FIG.33

FIG.35

FIG.32

FIG.34

NOMINAL TRAJECTORY

NORTH (KM)

EAST (KM)

FIG.36

VELOCITY (M/S)

TIME (SEC)

FIG.37

AZIMUTH (DEG)

TIME (SEC)

FIG.38

PSIDOT (DEG/SEC)

TIME (SEC)

FIG.39

EP 0 629 877 A1

GPS POSITION ERRORS

FIG.40

UNAIDED DR POSITION ERRORS

FIG.41

GPS/DR POSITION ERRORS

FIG.42

GPS AIDED DR POSITION ERRORS

FIG.43

EP 0 629 877 A1

## GPS POSITION

FIG.44

## UNAIDED DR POSITION

FIG.45

## GPS/DR POSITION

FIG.46

## GPS AIDED DR POSITION

FIG.47

FIG.48

FIG.49

FIG.50

FIG.51

EP 0 629 877 A1

FIG.52

**European Patent Office**

## EUROPEAN SEARCH REPORT

Application Number

EP 94 40 1372

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | VEHICLE NAVIGATION & INFORMATION SYSTEMS CONFERENCE PROCEEDINGS, 10 October 1991, Warrendale, PA, US; WEI-WEN KAO: 'Integration of GPS and DEAD-Reckoning Navigation | 1,4,5, 11,14,15 | G01S5/14 G01C21/20 |
| Y | Systems', pages 635-643. | 7,17 | |
| A | * page 640, left column, line 5 - right column, line 27 * | 2,3,6-8, 12,13, 16-18 | |
| | --- | | |
| Y | EP-A-0 375 815 (AISIN AW CO., LTD.) * column 1, line 41 - column 2, line 50; figures 1,2 * | 7,17 | |
| | --- | | |
| A | DE-A-33 10 111 (TELDIX GMBH) * the whole document * | 1,4,5, 11,14,15 | |
| | --- | | |
| A | IEEE PLANS'88 POSITION LOCATION AND NAVIGATION SYMPOSIUM RECORD, 1988, New York, NY; US; KRAKIWSKY et al: 'A Kalman Filter for Integrating Dead Reckoning, Map Matching and GPS positioning', pages 39-46. * the whole document * | 1,4,5, 11,14,15 | TECHNICAL FIELDS SEARCHED (Int.Cl.5) G01S G01C |
| | --- | | |
| A | EP-A-0 453 726 (PIONEER ELECTRONIC CORPORATION) * page 2, line 32 - page 4, line 22; figures 1,2 * | 2,3,10, 12,13,20 | |
| | ----- | | |

The present search report has been drawn up for all claims

| Place of search | Date of completion of the search | Examiner |
|---|---|---|
| THE HAGUE | 6 September 1994 | Haffner, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)